(19) Europäisches Patentamt
European Patent Office
Office européen des brevets

(11) EP 2 582 520 B2

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**16.01.2019 Patentblatt 2019/03**

(45) Hinweis auf die Patenterteilung:
**30.04.2014 Patentblatt 2014/18**

(21) Anmeldenummer: **11730556.5**

(22) Anmeldetag: **31.05.2011**

(51) Int Cl.:
***B32B 27/32*** (2006.01) ***B32B 27/34*** (2006.01)
***F16L 55/165*** (2006.01)

(86) Internationale Anmeldenummer:
**PCT/EP2011/002685**

(87) Internationale Veröffentlichungsnummer:
**WO 2011/157356 (22.12.2011 Gazette 2011/51)**

(54) **Einlegeschlauch**

Insertion tube

Gaine d’encastrement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2010 DE 102010023764**

(43) Veröffentlichungstag der Anmeldung:
**24.04.2013 Patentblatt 2013/17**

(73) Patentinhaber: **Infiana Germany GmbH & Co. KG**
**91301 Forchheim (DE)**

(72) Erfinder: **HUMMEL, Henrik**
**91301 Forchheim (DE)**

(74) Vertreter: **Kutzenberger Wolff & Partner**
**Waidmarkt 11**
**50676 Köln (DE)**

(56) Entgegenhaltungen:
**EP-A2- 0 267 742**
**WO-A1-2007/054350**
**WO-A2-2010/033297**
**DE-A1- 19 924 251**
**DE-C2- 19 817 413**
**DE-U1- 29 700 236**



Printed by Jouve, 75001 PARIS (FR)

## Beschreibung

Die vorliegende Erfindung betrifft eine für UV-Strahlung zumindest teilweise durchlässige, flüssigkeitsdichte Mehrschichtfolie, vorzugsweise in Form einer Schlauchfolie, umfassend eine Schichtfolge aus einer Schicht (a) basierend auf wenigstens einem thermoplastischen Olefin-Homo-oder Copolymeren als eine der Außenschichten, einer Haftvermittlerschicht (b), einer innenliegende Schicht (c) basierend auf wenigstens einem Homo- und/oder Copolyamid, einer Haftvermittlerschicht (d), einer Schicht (e) basierend auf wenigstens einem Homo- und/oder Copolyamid als eine der Außenschichten, wobei das thermoplastische Olefin-Homo-oder Copolymer der Schicht (a) eine VICAT Erweichungstemperatur von wenigstens 100°C aufweist, die Verwendung einer solchen Mehrschichtfolie als innenliegenden Schlauch eines Einlegeschauchs zur Sanierung von unterirdischen Rohren, ein solcher Einlegeschlauch und ein Rohrsaniерungsysstem geeignet zur Sanierung von unterirdischen Rohren, vorzugsweise unterirdischen Kanalrohren.

Aus dem Stand der Technik sind bereits mehrschichtige Folien bekannt, die eine Durchlässigkeit für UV-Strahlung aufweisen und u.a. bei der Sanierung von Rohren eingesetzt werden können.

So wird beispielsweise in EP-A- 0 342 897 eine mehrschichtige Folie beschrieben, die eine Polyamid-Schicht als eine erste und eine Ionomer-Siegelschicht als eine zweite Oberflächenschicht aufweist. Wird die mehrschichtige Folie zur Rohrsanierung eingesetzt, so wird die Polyamid-Schicht durch Erwärmen mit einem faserartigen Vlies verbunden und dieses dann mit einem aushärtbaren Harz getränkt. Nach Konditionierung der Folie wird diese zusammen mit dem auf der Oberfläche befindlichen getränkten Harz auf den zu sanierenden Bereich der Rohr-Innenwand über den gesamten Rohr-Umfang aufgebracht. Nach Aushärtung des Harzes mittels UV-Strahlung wird ein stabiler Rohrabschnitt an der zu sanierenden Innenwand des Rohres erhalten. Die beiden Enden der Folie werden dann über die Ionomer-Siegelschicht miteinander versiegelt.

In einem weiteren bekannten Verfahren zur Sanierung von unterirdischen Rohren wird ein flexibler Einlegeschlauch bereitgestellt, der in das zu sanierende Rohr eingezogen wird. Dieser Einlegeschlauch umfasst zwei Schläuche, vorzugsweise Kunststoffschläuche, mit unterschiedlichem Durchmesser, zwischen denen ein Trägermaterial eingebracht ist, welches mit einem reaktiven Kunststoffharz getränkt ist. Nach dem Einbringen des flachliegenden Einlegeschlauchs in das Rohr und dem Aufblasen des Einlegeschlauchs bis auf den Durchmesser des Rohrs wird das Kunststoffharz zwischen den beiden Schläuchen ausgehärtet, um nach Entfernen des Innenschlauches ein stabiles Rohr an der zu sanierenden Innenwand des Rohres zu erhalten. Die Aushärtung kann durch Bestrahlung mit UV-Strahlung erreicht werden. Um eine ungewollte, vorzeitige Aushärtung des Kunststoffharzes vor dem Einbringen in das zu sanierende Rohr zu verhindern, ist es notwendig, dass der außenliegende Schlauch des Einlegeschlauchs eine Schutzschicht aufweist oder daraus besteht, um eine vorzeitige Einwirkung von UV-Strahlung von außen und damit eine vorzeitige Harzhärtung zu verhindern. Der innenliegende Schlauch eines solchen Einlegeschlauchs muss dagegen eine Durchlässigkeit gegenüber UV-Strahlung aufweisen, um im aufgeblasenen Zustand den Aushärtungsvorgang zu ermöglichen.

An den innenliegenden Schlauch eines solchen Einlegeschlauches bzw. an eine entsprechende zur Rohrsanierung eingesetzte, vorzugsweise schlauchförmige, Mehrschichtfolie, wie z.B. in EP-A- 0 342 897 offenbart, werden hohe mechanische Anforderungen gestellt, damit diese den bei ihrer Handhabung auftretenden Belastungen, die z.B. beim Einbringen in das zu sanierende Rohr, beim Aufblasen der jeweiligen Folie im Rohr oder - nach erfolgreicher Sanierung - beim Entfernen aus dem Rohr auftreten, standhalten kann.

Nachteilig an einer gemäß EP-A- 0 342 897 offenbarten mehrschichtigen Folie ist, dass diese zumindest im Bereich der Siegelnaht eine Schwachstelle aufweist, bzw. bei herkömmlichen Schlauchfolien, die als innenliegende Schläuche eines Einlegeschlauchs bei der Rohrsanierung eingesetzt werden, dass diese die erforderlichen mechanischen Eigenschaften nicht aufweisen, um den vorstehend beschriebenen Belastungen standzuhalten. Gegebenenfalls kann bei herkömmlichen Folien, die wenigstens eine Schicht basierend auf einem Polyamid aufweisen, durch Konditionierung dahingehend eine Verbesserung erreicht werden.

Es besteht daher ein Bedarf an Mehrschichtfolien, die die vorstehend genannten Nachteile nicht aufweisen.

Eine Aufgabe der vorliegenden Erfindung war es daher, eine Mehrschichtfolie zur Verfügung zu stellen, insbesondere in Form einer Schlauchfolie, die als innenliegender Schlauch eines Einlegeschlauchs für die Sanierung von unterirdischen Rohren, vorzugsweise von unterirdischen Kanalrohren, geeignet ist, da sie sowohl die notwendige Durchlässigkeit gegenüber UV-Strahlung als auch so gute mechanische Eigenschaften aufweist, dass sie den bei der Rohrsanierung auftretenden hohen Belastungen standhält.

Diese Aufgabe wird durch die Bereitstellung des Einlegeschlauchs nach Anspruch 1 gelöst.

Es wurde überraschend gefunden, dass sich die erfindungsgemäße Mehrschichtfolie durch eine ausreichende Barrierewirkung gegen das Austrocknen des zur Rohrsanierung eingesetzten Harzes, und damit gegen den Verlust, d.h. Migration von Monomeren bzw. übrigem Tränkmittel auszeichnet. Es wurde ferner überraschend festgestellt, dass sich die erfindungsgemäße Mehrschichtfolie, insbesondere in Form einer mehrschichtigen Schlauchfolie, aber auch als eine zu einem Schlauch gesiegelte Mehrschichtfolie, durch sehr gute mechanische Eigenschaften, insbesondere durch eine sehr gute Dehnbarkeit, auszeichnet, so dass sie den bei der Sanierung von unterirdischen Rohren auftretenden Belastungen, insbesondere beim Aufblasen im Rohrsystem, bei dem vorangegangenen Transport, der vorangegangenen Lagerung und dem Einzug in das zu sanierende Rohr standhält, und sich ferner nach der Aushärtung des Harzes ohne ein Ab-, Ein- oder Zerreißen davon abziehen lässt. Es wurde ferner überraschend gefunden, dass die erfindungsgemäße Mehrschichtfolie die sehr guten mechanischen Eigenschaften auch ohne vorherige Konditionierung aufweist, so dass ein Konditionierungsschritt nicht erforderlich ist.

Unter dem Begriff "Schlauchfolie" wird im Sinne dieser Erfindung eine durch (Co)-Extrusion, vorzugsweise durch Blasfolien-(Co)-Extrusion, hergestellte Mehrschichtfolie verstanden, die keine Siegelnaht aufweist.

Unter dem Begriff "UV-Strahlung" wird im Sinne dieser Erfindung elektromagnetische Strahlung in einem Wellenlängenbereich von 200 bis 400 nm verstanden.

Die erfindungsgemäße Mehrschichtfolie ist zumindest teilweise durchlässig, vorzugsweise zu wenigstens 80%, besonders bevorzugt zu wenigstens 90% durchlässig für UV-Strahlung.

In einer bevorzugten Ausführungsform ist die erfindungsgemäße Mehrschichtfolie nicht nur zumindest teilweise durchlässig für UV-Strahlung, sondern zudem zumindest teilweise, vorzugsweise zu wenigstens 80%, besonders bevorzugt zu wenigstens 90% durchlässig für kurzwelliges, sichtbares Licht.

Unter dem Begriff "kurzwelliges, sichtbares Licht" wird im Sinne dieser Erfindung elektromagnetische Strahlung in einem Wellenlängenbereich von 400 bis 500 nm, vorzugsweise von 400 bis 450 nm verstanden.

Die erfindungsgemäße Mehrschichtfolie zeichnet sich durch hervorragende mechanische Werte, insbesondere durch eine sehr gute Dehnbarkeit, aus (bestimmt nach der nachstehend beschriebenen Methode). Vorzugsweise weist die erfindungsgemäße Mehrschichtfolie - bereits im nicht-konditionierten Zustand - eine Dehnbarkeit von wenigstens 15%, besonders bevorzugt von wenigstens 18%, ganz besonders bevorzugt von wenigstens 20%, insbesondere von wenigstens 30% auf.

Unter dem Begriff "Konditionierung" wird im Sinne dieser Erfindung der reversible Prozess einer Aufnahme von Feuchtigkeit, vorzugsweise von Wasser, durch ein Material, vorzugsweise durch ein thermoplastisches Kunststoffmaterial wie einem Homo- oder Copolyamid oder einer entsprechenden Folie, wie der erfindungsgemäßen Mehrschichtfolie, bis hin zur Gewichtskonstanz verstanden. Die Konditionierung führt üblicherweise zu einer Verbesserung der mechanischen Eigenschaften.

Zur Herstellung der Schicht (a) der erfindungsgemäßen Mehrschichtfolie eignet sich wenigstens ein thermoplastisches Olefin- Homo- oder Copolymer.

Vorzugsweise können zur Herstellung der Schicht (a) der erfindungsgemäßen Mehrschichtfolie thermoplastische Olefin-Homo-oder Copolymere von $\alpha$,ß-ungesättigten Olefinen mit 2-10 Kohlenstoffatomen eingesetzt werden. Geeignete Olefin-Homopolymere sind vorzugsweise ausgewählt aus der Gruppe umfassend Ethylen-Homopolymere (Polyethylene, PE), vorzugsweise LDPE und HDPE, Propylen-Homopolymere (Polypropylene, PP), Butylen-Homopolymere (Polybutylene, PB) und Isobutylen-Homopolymere (Polyisobutylene, PI) oder Mischungen aus wenigstens zwei der genannten Polymere. Mit "LDPE" wird Polyethylen niedriger Dichte bezeichnet, welches eine Dichte im Bereich von 0,86-0,93 g/cm$^3$ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm$^3$ liegen kann. Geeignete Olefin-Copolymere sind vorzugsweise Copolymere von Ethylen und/oder Propylen und wenigstens einem $\alpha$-Olefin mit mindestens 4, vorzugsweise mit 4-10, besonders bevorzugt mit 4-8 Kohlenstoffatomen, ganz besonders bevorzugt Copolymere von Ethylen und/oder Propylen mit wenigstens einem $\alpha$-Olefin ausgewählt aus der Gruppe umfassend Buten, Hexen und Octen. Der $\alpha$-Olefin-Anteil im Olefin-Copolymeren beträgt vorzugsweise höchstens 25 Gew.-%, besonders bevorzugt höchstens 15 Gew.-%, jeweils bezogen auf das Gesamtgewicht des Olefin-Copolymeren. Besonders geeignete Copolymere von Ethylen und wenigstens einem $\alpha$-Olefin mit mindestens 4 Kohlenstoffatomen sind LLDPE und/oder mPE. Mit "LLDPE" werden lineare Ethylen-Copolymere niedriger Dichte bezeichnet, welche durch das Vorhandensein einer linearen Hauptkette mit daran befindlichen Seitenketten gekennzeichnet sind und eine Dichte im Bereich von 0,86 und 0,94 g/cm$^3$ aufweisen. Mit "mPE" werden Ethylen-Copolymere bezeichnet, die mittels Metallocen-Katalysatoren polymerisiert wurden und vorzugsweise eine Dichte im Bereich von 0,88 und 0,93 g/cm$^3$ aufweisen. Bevorzugte Olefin-Homo-oder Copolymere zur Herstellung der Schicht (a) sind Ethylen-Homo- oder Copolymere und/oder Propylen-Homo- oder Copolymere. Besonders bevorzugt zur Herstellung der Schicht (a) ist eine Mischung aus wenigstens einem Ethylen-Homopolymer wie LDPE und wenigstens einem Ethylen-Copolymer wie LLDPE und/oder mPE.

Das thermoplastische Olefin-Homo-oder Copolymer der Schicht (a) der erfindungsgemäßen Mehrschichtfolie weist eine VICAT Erweichungstemperatur von wenigstens 100°C auf. Die VICAT Erweichungstemperatur (VST A/120) wird gemäß DIN EN ISO 306 / ASTM D1525 bestimmt.

Die Schicht (a) der erfindungsgemäßen Mehrschichtfolie weist vorzugsweise eine Schichtdicke von 10 $\mu$m bis 500 $\mu$m, besonders bevorzugt von 20 $\mu$m bis 400 $\mu$m, ganz besonders bevorzugt von 30 $\mu$m bis 300 $\mu$m auf.

In einer bevorzugten Ausführungsform beträgt die Schichtdicke der Schicht (a) der erfindungsgemäßen Mehrschichtfolie wenigstens 40%, vorzugsweise wenigstens 50%, besonders bevorzugt von 50% bis 90%, der Gesamtschichtdicke der Mehrschichtfolie.

Zur Herstellung der Schichten (c) und (e) der erfindungsgemäßen Mehrschichtfolie eignet sich - jeweils unabhängig voneinander - wenigstens ein Homo- und/oder Copolyamid.

Zur Herstellung der Schichten (c) und (e) der erfindungsgemäßen Mehrschichtfolie geeignete Homo- oder Copolyamide sind vorzugsweise ausgewählt aus der Gruppe thermoplastische aliphatische, teilaromatische oder aromatische Homo-oder Copolyamide. Diese Homo-oder Copolymamide können aus Diaminen wie aliphatischen Diaminen mit 2-10 Kohlenstoffatomen, insbesondere Hexamethylendiamin und/oder aromatischen Diaminen mit 6-10 Kohlenstoffatomen, insbesondere p-Phenylendiamin und aus Dicarbonsäuren aliphatische oder aromatische Dicarbonsäuren mit 6-14 Kohlenstoffatomen wie z.B. Adipinsäure, Terephthalsäure oder Isoterephthalsäure hergestellt werden. Weiterhin können Homo- oder Copolyamide aus Lactamen mit 4-10 Kohlenstoffatomen wie z.B. aus ε-Caprolactam hergestellt werden. Erfindungsgemäß zum Einsatz kommende Polyamide sind vorzugsweise PA 6, PA 12, PA 66, PA 6I, PA 6T oder entsprechende Co-Polymere oder Mischungen aus wenigstens zwei der genannten Polyamide.

Vorzugsweise weisen die Schichten (c) und Schicht (e) der erfindungsgemäßen Mehrschichtfolie einen identischen Schichtaufbau, besonders bevorzugt eine identische Schichtdicke und/oder identische Polyamid-Komponenten und/oder eine identische Zusammensetzung auf.

In einer weiteren bevorzugten Ausführungsform der erfindungsgemäßen Mehrschichtfolie weisen die Schichten (c) und Schicht (e) der erfindungsgemäßen Mehrschichtfolie einen unterschiedlichen Schichtaufbau, besonders bevorzugt eine unterschiedliche Schichtdicke und/oder unterschiedliche Polyamid-Komponenten und/oder eine identische Zusammensetzung auf.

Besonders bevorzugt weisen die Schichten (c) und (e) jeweils dasselbe Polyamid auf.

Die Schichten (c) und (e) der erfindungsgemäßen Mehrschichtfolie weisen vorzugsweise jeweils unabhängig voneinander eine Schichtdicke von 5 μm bis 100 μm, besonders bevorzugt von 10 μm bis 60 μm, auf.

Zur Herstellung der Haftvermittlerschichten (b) und (d) der erfindungsgemäßen Mehrschichtfolie können übliche Haftvermittler eingesetzt werden. Vorzugsweise basieren die Haftvermittlerschichten (b) und (d) jeweils unabhängig voneinander auf wenigstens einem modifizierten thermoplastischen Polymeren, vorzugsweise auf wenigstens einem modifizierten Olefin-Homo- oder Copolymeren. Als Olefin-Homo- oder Copolymere können dabei diesselben Olefin-Homo- oder Copolymere eingesetzt werden, die auch zur Herstellung der Schicht (a) geeignet sind, nur dass diese modifiziert sind. Besonders bevorzugt basieren die Haftvermittlerschichten (b) und (d) jeweils unabhängig voneinander auf wenigstens einem modifizierten Ethylen-Homo- oder Copolymeren und/oder wenigstens einem modifizierten Propylen-Homo- oder Copolymeren, welches mit wenigstens einer organischen Säure oder wenigstens einem vorzugsweise cyclischen organischen Säureanhydrid, vorzugsweise mit Maleinsäureanhydrid modifiziert ist.

Die Haftvermittlerschichten (b) und (d) der erfindungsgemäßen Mehrschichtfolie weisen vorzugsweise jeweils unabhängig voneinander eine Schichtdicke von 1 μm bis 30 μm, besonders bevorzugt von 2 μm bis 20 μm, auf.

Die Schichten (a), (c) und (e) sowie die Haftvermittlerschichten (b) und (d) der erfindungsgemäßen Mehrschichtfolie können, wenn notwendig, jeweils unabhängig voneinander, mit Zusatzstoffen ausgewählt aus der Gruppe umfassend Antistatika, Antioxidantien, Antiblockmittel, Antifogmittel, antimikrobielle Wirkstoffe, Farbstoffe, Farbpigmente, Stabilisierungsmittel, vorzugsweise Hitze-Stabilisatoren, Prozess-Stabilisatoren, Prozesshilfsmittel, Flammschutzmittel, Nukleierungsmittel, Kristallisationsmittel, vorzugsweise Kristallkeimbildner, Gleitmittel, optische Aufheller, Flexibilisierungsmittel, Siegelmittel, Weichmacher, Silane, Abstandshalter, Füllstoffe, Peel-Additive, Wachse, Benetzungsmittel, oberflächenaktive Verbindungen, vorzugsweise Tenside, und Dispergiermittel, dotiert sein, soweit solche Zusatzstoffe die UV Strahlen-Durchlässigkeit nicht beeinträchtigen.

Die Schichten (a), (c) und (e) sowie die Haftvermittlerschichten (b) und (d) der erfindungsgemäßen Mehrschichtfolie können, wenn notwendig, jeweils unabhängig voneinander wenigstens 0,01-20 Gew.-%, vorzugsweise wenigstens 0,1-10 Gew.-%, jeweils bezogen auf das Gesamtgewicht einer einzelnen Schicht, wenigstens einen der vorstehend genannten Zusatzstoffe enthalten.

In einer ganz bevorzugten Ausführungsform ist die erfindungsgemäße Mehrschichtfolie fünfschichtig, d.h. besteht aus den Schichten (a), (b), (c), (d) und (e), so dass die beiden Polyamidschichten (c) und (e) über eine Haftvermittlerschicht (d) miteinander verbunden sind.

Vorzugsweise weist die erfindungsgemäße Mehrschichtfolie eine Gesamtschichtdicke von 20 bis 2000 μm, besonders bevorzugt von 50 bis 1500 μm, ganz besonders bevorzugt von 100 bis 1000 μm, insbesondere von 120 bis 400 μm auf.

Die erfindungsgemäßen Mehrschichtfolien können nach bekannten, üblichen Verfahren hergestellt werden, wobei die Mehrschichtfolie vorzugsweise nicht konditioniert werden muss.

In einer bevorzugten Ausführungsform können alle Schichten, vorzugsweise die Schichten (a), (b), (c) (d) und (e) der erfindungsgemäßen Mehrschichtfolie als gesamte mehrschichtige Folie in Form einer Schlauchfolie produziert und verarbeitet werden.

In einer besonders bevorzugten Ausführungsform ist die erfindungsgemäße Mehrschichtfolie eine mehrschichtige Schlauchfolie ohne Siegelnaht.

In einer anderen bevorzugten Ausführungsform können alle Schichten, vorzugsweise die Schichten (a), (b), (c) (d) und (e) der erfindungsgemäßen Mehrschichtfolie insgesamt als eine Cast-Folie produziert und verarbeitet werden.

Vorzugsweise wird eine so erhaltene erfindungsgemäße Cast-Folie durch Versiegelung der Schicht (a) zu einem Schlauch verarbeitet. Dies gilt auch für erfindungsgemäße Mehrschichtfolien, die als Flachfolien, auch nach anderen, üblichen Verfahren erhalten werden können.

Dementsprechend kann die Herstellung aller einzelnen Schichten, vorzugsweise der Schichten (a), (b), (c) (d) und (e), der erfindungsgemäßen Mehrschichtfolie auch durch (Co)-Extrusion erfolgen.

Die erfindungsgemäße Mehrschichtfolie, vorzugsweise aus den Schichten (a), (b), (c) (d) und (e) wird vorzugsweise durch (Co)-Extrusion, besonders bevorzugt durch Blasfolien-(Co)-Extrusion oder durch Cast-(Co)-Extrusion hergestellt, ganz besonders bevorzugt durch Blasfolien-(Co)-Extrusion als Schlauchfolie produziert.

Alternativ können auch einzelne Schichten der erfindungsgemäßen Mehrschichtfolie als Schichtverbund durch (Co)-Extrusion hergestellt werden.

Diese Herstellungsverfahren und entsprechende Produktionsparameter sind dem Fachmann allgemein bekannt.

Die erfindungsgemäße Mehrschichtfolie kann vorzugsweise geprägt sein.

Weiterhin kann die erfindungsgemäße Mehrschichtfolie vorzugsweise bedruckt sein.

Vorzugsweise ist die erfindungsgemäße Mehrschichtfolie weder mono- noch biaxial orientiert, d. h. sie wird nach ihrer Herstellung vorzugsweise durch Extrusion, keiner Orientierung unterworfen. Die erfindungsgemäße Mehrschichtfolie ist praktisch nicht schrumpffähig, insbesondere auch nicht durch Wärmeentwicklung.

Die erfindungsgemäße Mehrschichtfolie ist vorzugsweise durch die Schicht (a) siegelfähig.

Vorzugsweise ist die erfindungsgemäße Mehrschichtfolie transparent.

Wie vorstehend erwähnt ist die erfindungsgemäße Mehrschichtfolie zumindest teilweise für UV-Strahlung durchlässig.

Die erfindungsgemäße Mehrschichtfolie, vorzugsweise in Form einer Schlauchfolie, aber auch als eine zu einem Schlauch gesiegelte Mehrschichtfolie, eignet sich daher als innenliegender Schlauch eines Einlegeschlauchs zur Sanierung von unterirdischen Rohren, vorzugsweise von unterirdischen Kanalrohren.

Ein weiterer Gegenstand der vorliegenden Erfindung ist daher die Verwendung der erfindungsgemäßen Mehrschichtfolie, vorzugsweise in Form einer Schlauchfolie, als innenliegender Schlauch eines Einlegeschlauchs zur Sanierung von unterirdischen Rohren, vorzugsweise von unterirdischen Kanalrohren mit ggf. Defekten. Dabei erlaubt die erfindungsgemäße Mehrschichtfolie, vorzugsweise in Form einer Schlauchfolie, aufgrund ihrer zumindest teilweisen Durchlässigkeit für UV-Strahlung die Aushärtung eines zwischen eines außenliegenden ein-oder mehrschichtigen Schlauches und dem innenliegenden erfindungsgemäßen, mehrschichtigen Schlauch befindlichen, reaktiven Kunststoffharzes oder eines mit reaktivem Kunststoffharz getränkten Trägermaterials.

Als Trägermaterial kommen vorzugsweise Glasgewebe aus Glasfasern (Glasfasermaterial), Vliese und/oder nonwoven Textilfabrikate ggf. mehrlagig in Frage, die jeweils mit wenigstens einem reaktiven Kunststoffharz, vorzugsweise jeweils mit wenigstens einem ungesättigten Polyesterharz und $\alpha,\beta$-ungesättigten Monomeren, wie z. B. Styrol getränkt sind. Solche Glasfasermaterialien sind u.a. als glasfaserverstärkte Kunststoffe (GFK) bekannt.

Wie vorstehend angeführt ist es nicht erforderlich, die erfindungsgemäße Mehrschichtfolie, vorzugsweise in Form einer Schlauchfolie, zu konditionieren, da sie sich auch ohne eine solche Konditionierung durch sehr gute mechanische Eigenschaften wie z.B. eine gute Dehnbarkeit auszeichnet. Vorzugsweise ist die erfindungsgemäße Mehrschichtfolie, vorzugsweise in Form einer Schlauchfolie, als innenliegender Schlauch eines Einlegeschlauchs zur Sanierung von unterirdischen Rohren, vorzugsweise von unterirdischen Kanalrohren, daher nicht-konditioniert.

Ein weiterer Gegenstand der vorliegenden Erfindung ist ein Einlegeschlauch geeignet zur Sanierung von unterirdischen Rohren, vorzugsweise von unterirdischen Kanalrohren umfassend eine erfindungsgemäße, flüssigkeitsdichte vorzugsweise nicht-konditionierte Mehrschichtfolie, vorzugsweise in Form einer Schlauchfolie, als innenliegenden Schlauch und eine flüssigkeitsdichte, UV-Strahlung und/oder kurzwelliges, sichtbares Licht absorbierende und/oder reflektierende außenliegende ein- oder mehrschichtige Schlauchfolie als außenliegenden Schlauch und ein zwischen den beiden Schläuchen liegendes, mit einem reaktivem Kunststoffharz getränktes Trägermaterial. Aus diesem getränkten Trägermaterial wird nach der Aushärtung das sanierte Kanalrohr gebildet. Nach der Aushärtung wird die erfindungsgemäße Mehrschichtfolie, vorzugsweise in Form einer Schlauchfolie, als innenliegender Schlauch vorzugsweise vom sanierten, aus ausgehärtetem Kunststoff und Trägermaterial gebildeten Kanalrohr ab- bzw. heraus gezogen, kann aber alternativ auch im sanierten Rohr belassen bleiben.

Die Herstellung solcher Einlegeschläuche ist dem Fachmann z.B. aus WO 2007/054350 A1 oder EP-B 1 155 256 bekannt.

Fig. 1 zeigt beispielhaft einen Längsschnitt durch einen erfindungsgemäßen Einlegeschlauch (107) nach Einlegen in ein Rohr (101), das einen zu sanierenden Bereich (102) aufweist. Der Einlegeschlauch umfasst eine flüssigkeitsdichte, UV-Strahlung und/oder kurzwelliges, sichtbares Licht absorbierende und/oder reflektierende außenliegende ein- oder mehrschichtige Schlauchfolie als außenliegenden Schlauch (103) und eine erfindungsgemäße flüssigkeitsdichte vorzugsweise nicht-konditionierte Mehrschichtfolie, vorzugsweise in Form einer Schlauchfolie, als innenliegenden Schlauch (105) und ein dazwischenliegendes mit einem reaktivem Kunststoffharz getränktes Trägermaterial (104). Nach

Aufblasen des Einlegeschlauchs (107) bis auf den Durchmesser des Rohrs (101) weist der Einlegeschlauch (107) einen Hohlraum (106) auf, in den eine UV-Strahlung und/oder kurzwelliges, sichtbares Licht aussendende vorzugsweise bewegliche Quelle, vorzugsweise ein UV-Strahler, eingebracht werden kann, die eine Aushärtung des mit einem reaktivem Kunststoffharz getränkten Trägermaterials (104) bewirkt. Aus diesem getränkten Trägermaterial (104) wird nach der Aushärtung und ggf. nach Ab- bzw. Herausziehen des innenliegenden Schlauchs (105) das sanierte Rohr (108) gebildet. Die Weite des dann sanierten Rohres (108) ist in Fig. 1 lediglich aus Gründen der besseren Darstellbarkeit verhältnismäßig gering dargestellt.

Als außenliegender Schlauch eines erfindungsgemäßen Einlegeschlauches eignet sich grundsätzlich jede übliche flüssigkeitsdichte ein-oder mehrschichtige Schlauchfolie, die UV-Strahlung und/oder kurzwelliges, sichtbares Licht absorbiert und/oder reflektiert.

Vorzugsweise ist die erfindungsgemäß als außenliegender Schlauch eingesetzte ein-oder mehrschichtige Schlauchfolie eines solchen Einlegeschlauches eine zumindest kontakttransparente, UV-Strahlung und/oder kurzwelliges, sichtbares Licht absorbierende und/oder reflektierende Schlauchfolie. Besonders bevorzugt enthält die erfindungsgemäß als außenliegender Schlauch eingesetzte ein-oder mehrschichtige Schlauchfolie wenigstens eine Schicht basierend auf wenigstens einem gegebenenfalls modifizierten thermoplastischen Olefin-Homo-oder Copolymeren enthaltend eine Kombination aus wenigstens einem kurzwelliges, sichtbares Licht absorbierenden und/oder reflektierendes organischen oder anorganischen Farbpigment oder Farbstoff, und aus wenigstens einer die UV-Strahlung absorbierenden und/oder reflektierenden, organischen oder anorganischen Verbindung. Als ggf. modifizierte Olefin-Homo- oder Copolymere können dabei diesselben gegebenenfalls modifizierten thermoplastischen Olefin-Homo- oder Copolymere eingesetzt werden, die auch zur Herstellung der Schicht (a) bzw. der Haftvermittlerschichten (b) und (d) der erfindungsgemäßen Mehrschichtfolie geeignet sind.

Unter dem Begriff "kontakttransparent" wird im Sinne dieser Erfindung verstanden, dass die erfindungsgemäß als ein-oder mehrschichtiger Schlauch eingesetzte Schlauchfolie eines solchen Einiegeschlauches zumindest so transparent ist, dass eine Kontrolle der gleichmäßigen Tränkung des Trägermaterials mit dem auszuhärtenden Harz möglich ist. Dies beruht auf der Prüfung der Helligkeit des getränkten Trägermaterials.

Die erfindungsgemäß als außenliegender Schlauch eingesetzte ein-oder mehrschichtige Schlauchfolie enthält vorzugsweise wenigstens ein organisches oder anorganisches Farbpigment oder wenigstens einen organischen oder anorganischen Farbstoff ausgewählt aus der Gruppe umfassend Carbonyl-Farbstoffe, vorzugsweise Chinon-Farbstoffe, Indigo-Farbstoffe und Chinacridone, Azo-Verbindungen, Cyanin-Verbindungen, vorzugsweise Triphenylmethan-Verbindungen, Azomethine, Isoindoline, Dioxazine, Metalloxide, Übergangsmetalloxide, Metalloxidhydrate und Übergangsmetalloxidhydrate. Besonders bevorzugt werden von diesen Farbstoffgruppen oder Farbpigmenten die gelben Farbstoffgruppen oder Farbpigmente ausgewählt. Vorzugsweise liegt ein organisches, gelbes Farbpigment oder ein organischer, gelber Farbstoff ausgewählt aus der Gruppe umfassend Benzimidazol-Derivate, Benzotriazol-Derivate, 1,4-Chinon-Derivate, 1,4-Naphthochinon-Derivate, 9,10-Anthrachinon-Derivate, Phenylazophenol-Derivate, jeweils in Form der freien Verbindungen, in Form von Tautomeren oder der Salze von Säuren oder Basen oder der Solvate, vorzugsweise der Hydrate vor. Vorzugsweise liegt ein anorganisches, gelbes Farbpigment oder ein anorganischer, gelber Farbstoff ausgewählt aus der Gruppe umfassend Übergangsmetalloxide und Übergangsmetalloxidhydrate vor. Besonders bevorzugt ist ein gelbes Farbpigment oder ein gelber Farbstoff ausgewählt aus der Gruppe umfassend 4-Phenylazophenol, 2-(2'-Methyl)phenylazo-4-methylphenol, N-(4-Phenylazo)phenyldiethanolamin, Benzotriazole, Benzimidazolon, Eisenoxid und Eisenoxidhydrat, ganz besonders bevorzugt ist Benzimidazolon. Vorzugsweise absorbiert und/oder reflektiert das organische oder anorganische Farbpigment oder der organische oder anorganische Farbstoff kurzwelliges, sichtbares Licht im Wellenbereich von 400 bis 500 nm, besonders bevorzugt im Wellenbereich von 400 bis 450 nm, vorzugsweise jeweils zu mehr als 90%.

In einer bevorzugten Ausführungsform enthält die erfindungsgemäß als außenliegender Schlauch eingesetzte ein-oder mehrschichtige Schlauchfolie vorzugsweise wenigstens eine organische oder anorganische Verbindung ausgewählt aus der Gruppe umfassend Metalloxide, Übergangsmetalloxide, Metalloxidhydrate, Übergangsmetalloxidhydrate, Phosphite, Benzophenone, Anthranilate, Salicylate, Dibenzoylmethane-Derivate, p-Aminobenzosäure-Derivate, Zimtsäure-Derivate (Phenylacrylsäure -Derivate), Benzimidazol-Derivate, Benzotriazol-Derivate, Cyanoacrylate, Benzotriazol-Derivate, β-β'-Divinylacrylate, Alkyl-a-cyano-β-β'-divinylacrylate, 1,3,5-Triazin-Verbindungen und sterisch gehinderte Amine, jeweils in Form der freien Verbindungen, in Form ihrer Tautomeren oder jeweils ihrer Salze von Säuren oder Basen als UV-Strahlung absorbierende und/oder reflektierende Verbindung. Derartige Verbindungen sind teilweise marktgeführte Produkte, wie z. B. Uvinule® der BASF AG.

Unter dem Begriff "sterisch gehinderte Amine" werden Verbindungen verstanden, bei denen an wenigstens ein dreibindiges Stickstoffatom ein oder mehrere raumfüllende, organische Reste gebunden sind. Vorzugsweise handelt es sich um aromatische oder aliphatische, azyklische oder zyklische, sekundäre und tertiäre Amine wie N,N'-disubstituierte p-Phenylendiamine oder substituierte (Amino)-Piperidine.

Besonders bevorzugt wird als UV-Strahlung absorbierende und/oder reflektierende, organische oder anorganische Verbindungen wenigstens eine Verbindung aus der Gruppe umfassend Zinkoxid, Titandioxid, 2-Ethoxy-ethyl-p-methoxycinnamat, Diethanolamin-p-methoxycinnamat, Octyl-p-methoxycinnamat, 2-Ethylhexyl-2-cyano-3,3-diphenylacrylat, Kaliumcinnamat, Propyl-4-methoxy-cinnamat, Amyl-4-methoxycinnamat, α-Cyano-4-methoxyzimtsäure bzw. der entsprechende Hexylester, Cyclohexyl-4-methoxycinnamat, Glyceryl-p-amino-benzoat, Amyl-p-dimethylaminobenzoat, Ethyl-4-bis(hydroxypropyl)-aminobenzoat, Octyl-p-dimethylaminobenzoat, Ethoxylierte-4-Aminobenzosäure, Octylsalicylat, Triethanolaminsalicylat, Salze der Salicylsäure, 4-Isopropylbbnzylsalicylat, 2-Ethylhexyl-2-(4-phenylbenzoyl)benzoat, Homomenthylsalicylat, , 2-Hydroxy-4-methoxybenzophenon, 2,4,6-Trianilino-(p-carbo-2-ethylhexyloxy)-1,3,5-triazin, 2-Phenylbenzimidazol-5-sulfonsäure, 1-(4-tert-Butyl-phenyl)-3-(4-methoxyphenyl)propan-1,3-dion, p-Cumenyl-3-phenylpropan-1,3-dion, 1,3-Bis(4-Methoxyphenyl)propan-1,3-dion, Menthylanthranilat, Homomenthyl-N-acetylanthranilat, 2-Hydroxy-4-octylbenzophenon (Uvinul® 3008, Uvinul® 3008 FL), 6-*tert*-Butyl-2-(5-chlor-2H-benzotriazol-2-yl)-4-methylphenol (Uvinul® 3026, Uvinul® 3026 GR), 2,4-Di-*tert*-butyl-6-(5-chlor-2H-benzotriazol-2-yl)-phenol (Uvinul® 3027), 2-(2H-Benzotriazol-2-yl)-4,6-di-*tert*-pentylphenol (Uvinul® 3028, Uvinul® 3028 GR), 2-(2H-Benzotriazol-2-yl)-4-(1,1,3,3-tetramethylbutyl)-phenol (Uvinul® 3029, Uvinul® 3029 GR), 1,3-Bis-[(2'-cyano-3',3'-diphenylacryloyl)oxy]-2,2-bis-{[(2'-cyano-3',3'-diphenylacryloyl)oxy]methyl}-propan (Uvinul® 3030, Uvinul® 3030 GR), 2-(2H-Benzotriazol-2-yl)-4-methylphenol (Uvinul® 3033 P), 2-(2H-Benzotriazol-2-yl)-4,6-bis(1-methyl-1-phenylethyl)phenol (Uvinul® 3034), Ethyl-2-cyano-3,3-diphenylacrylat (Uvinul® 3035), (2-Ethylhexyl)-2-cyano-3,3-diphenylacrylat(Uvinul® 3039), N,N'-Bisformyl-N,N'-bis-(2,2,6,6-tetramethyl-4-piperidinyl)-hexamethylendiamin (Uvinul® 4050 H), Bis-(2,2,6,6-tetramethyl-4-piperidyl)-sebacat (Uvinul® 4077 H, Uvinul® 4077 GR), Bis-(1,2,2,6,6-pentamethyl-4-piperidyl)-sebacat, Methyl-(1,2,2,6,6-pentamethyl-4-piperidyl)-sebacat (Uvinul® 4092 H),

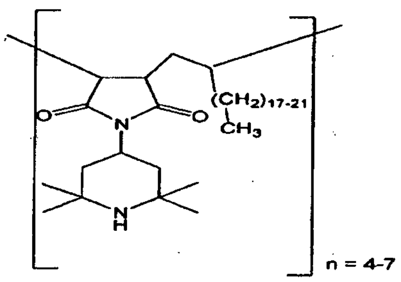

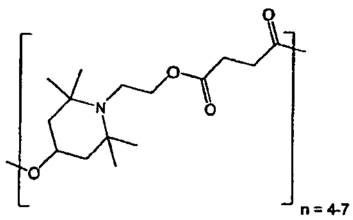

**(Uvinul® 5050 H)** **und** **(Uvinul® 5062 H, Uvinul® 5062 GR)**

eingesetzt.

Vorzugsweise absorbiert und/oder reflektiert die organische oder anorganische Verbindung UV-Strahlung in einem Wellenlängenbereich von 200 bis 400 nm, besonders bevorzugt von 300 bis 400 nm, vorzugsweise jeweils zu mehr als 90 %.

Vorzugsweise enthält die erfindungsgemäß als außenliegender Schlauch eingesetzte ein-oder mehrschichtige Schlauchfolie 0,05 bis 20 Gew.%, besonders bevorzugt 0,1 bis 5 Gew.%, ganz besonders bevorzugt 0,1 bis 2 Gew.%, jeweils bezogen auf das Gesamtgewicht der Folie, der Kombination aus wenigstens einem organischen oder anorganischen Farbpigment oder Farbstoff und wenigstens einer organischen oder anorganischen Verbindung. Vorzugsweise enthält die erfindungsgemäß als außenliegender Schlauch eingesetzte ein-oder mehrschichtige Schlauchfolie 0,05 bis 10 Gew.%, besonders bevorzugt 0,1 bis 3 Gew.%, bezogen auf das Gesamtgewicht der Folie, des organischen oder anorganischen Farbpigments oder Farbstoff. Vorzugsweise enthält die erfindungsgemäß als außenliegender Schlauch eingesetzte ein-oder mehrschichtige Schlauchfolie 0,05 bis 10 Gew.%, besonders bevorzugt 0,1 bis 2 Gew.%, bezogen auf das Gesamtgewicht der Folie, der organischen oder anorganischen Verbindung. Vorzugsweise ist jede Komponente der Kombination bei Temperaturen bis zu 300 °C stabil.

Die erfindungsgemäß als außenliegender Schlauch eingesetzte ein-oder mehrschichtige Schlauchfolie ist vorzugsweise mehrschichtig. Vorzugsweise umfasst eine erfindungsgemäß als außenliegender Schlauch eingesetzte mehrschichtige Schlauchfolie wenigstens eine Barriereschicht, besonders bevorzugt eine Sauerstoffbarriereschicht, Wasserdampfbarrierschicht oder eine Ölbarriereschicht.

Zur Herstellung der Barriereschicht eignet sich bevorzugt wenigstens ein Homo- oder Copolyamid, Ethylen-Vinylalkohol-Copolymer (EVOH), Polyvinylalkohol (PVOH), zyklisches Olefin-Copolymer (COC), Polyvinylidenchlorid (PVdC) oder eine Mischung aus wenigstens zwei der genannten Polymere, besonders bevorzugt wenigstens ein Homo- oder Copolyamid. Als Homo- oder Copolyamide können dabei diesselben Homo- oder Copolyamide eingesetzt werden, die auch zur Herstellung der Schichten (c) und (e) der erfindungsgemäßen Mehrschichtfolie geeignet sind. Die zur Herstellung der Barriereschicht eingesetzten Polyvinylalhohole werden durch vollständige oder unvollständige Hydrolyse von entsprechenden Polyvinylacetaten (PVA) gewonnen und umfassen somit sowohl teilverseifte Polyvinylacetate, die

einen Verseifungsgrad von 50 bis 98 mol-% aufweisen, als auch vollverseifte Polyvinylacetate mit einem Verseifungsgrad ≥ 98 %. Die zur Herstellung der Barriereschicht eingesetzten Ethylen-Vinylalkohol-Copolymere (EVOH) werden durch vollständige oder unvollständige Hydrolyse von entsprechenden ethylenhaltigen Polyvinylacetaten (EVAc) gewonnen und umfassen vor allem vollverseifte ethylenhaltige Polyvinylacetate mit einem Verseifungsgrad ≥ 98 %. Die zur Herstellung der Barriereschicht eingesetzten cyclischen Olefin-Copolymere (COC) können auch Copolymere von α,β-ungesättigten cyclischen Olefinen mit 4-10 Kohlenstoffatomen wie z.B. Norbornen und thermoplastischen α,β-ungesättigten Olefinen wie Ethylen oder Proplyen sein.

Vorzugsweise basiert wenigstens eine Oberflächenschicht der erfindungsgemäß als außenliegender Schlauch eingesetzten mehrschichtigen Schlauchfolie auf wenigstens einem ggf. modifizierten thermoplastischen Olefin-Homo- oder Copolymeren, das vorzugsweise siegelfähig ist. Als ggf. modifizierte Olefin-Homo- oder Copolymere können dabei diesselben gegebenenfalls modifizierten thermoplastischen Olefin-Homo- oder Copolymere eingesetzt werden, die auch zur Herstellung der Schicht (a) bzw. der Haftvermittlerschichten (b) und (d) der erfindungsgemäßen Mehrschichtfolie geeignet sind. Vorzugsweise kann dabei zwischen einer Oberflächenschicht und der Barriereschicht eine Haftvermittlerschicht, vorzugsweise enthaltend wenigstens ein modifiziertes Olefin-Homo- oder Copolymer, angeordnet sein. Als modifizierte Olefin-Homo- oder Copolymere können dabei diesselben modifizierten thermoplastischen Olefin-Homo- oder Copolymere eingesetzt werden, die auch zur Herstellung der Haftvermittlerschichten (b) und (d) der erfindungsgemäßen Mehrschichtfolie geeignet sind.

In einer bevorzugten Ausführungsform basiert jede der Oberflächenschichten der erfindungsgemäß als außenliegender Schlauch eingesetzten mehrschichtigen Schlauchfolie auf wenigstens einem vorzugsweise siegelfähigen Olefin-Homo oder - Copolymer und ist jeweils über eine vorstehend beschriebene Haftvermittlerschicht mit der Barriereschicht verbunden. In einer bevorzugten Ausführungsform enthält wenigstens eine der innenliegenden Schichten der erfindungsgemäß als außenliegender Schlauch eingesetzten mehrschichtigen Schlauchfolie die die schädliche Strahlung absorbierende und/oder reflektierende Kombination aus wenigstens einem organischen oder anorganischen Farbpigment oder Farbstoff und wenigstens einer organischen oder anorganischen Verbindung. Vorzugsweise liegen die Komponenten der Kombination in derselben Schicht der erfindungsgemäß als außenliegender Schlauch eingesetzten ein-oder mehrschichtigen Schlauchfolie, besonders bevorzugt in einer Haftvermittlerschicht vor. Vorzugsweise kann jede der Haftvermittlerschichten der erfindungsgemäß als außenliegender Schlauch eingesetzten mehrschichtigen Schlauchfolie die schädliche Strahlung absorbierende und/oder reflektierende Kombination aus wenigstens einem organischen oder anorganischen Farbpigment oder Farbstoff und wenigstens einer organischen oder anorganischen Verbindung enthalten.

In einer weiteren bevorzugten Ausführungsform liegen die Komponenten der Kombination in unterschiedlichen Schichten der erfindungsgemäß als außenliegender Schlauch eingesetzten mehrschichtigen Schlauchfolie vor. Vorzugsweise liegen das Farbpigment oder der Farbstoff in wenigstens einer Oberflächenschicht und die organische oder anorganische Verbindung in wenigstens einer innenliegenden Schicht der erfindungsgemäß als außenliegender Schlauch eingesetzten mehrschichtigen Schlauchfolie vor. Bevorzugt kann jede der Haftvermittlerschichten der erfindungsgemäß als außenliegender Schlauch eingesetzten mehrschichtigen Schlauchfolie wenigstens eine organische oder anorganische Verbindung enthalten. In einer weiteren bevorzugten Ausführungsform kann jede der Schichten der erfindungsgemäß als außenliegender Schlauch eingesetzten mehrschichtigen Schlauchfolie mit Ausnahme der Barriereschicht wenigstens ein organisches oder anorganisches Farbpigment oder Farbstoff enthalten.

Ein weiterer Gegenstand der vorliegenden Erfindung ist ein Rohrsanierungssystem geeignet zur Sanierung von unterirdischen Rohren, vorzugsweise von unterirdischen Kanalrohren, umfassend einen, für das Einbringen in das zu sanierende Rohr, vorzugsweise Kanalrohr, vorgesehenen Einlegeschlauch aus einer flüssigkeitsdichten, vorzugsweise nicht-konditionierten, erfindungsgemäßen Mehrschichtfolie, vorzugsweise in Form einer Schlauchfolie, als den innenliegenden Schlauch und eine flüssigkeitsdichte, UV-Strahlung und/oder kurzwelliges, sichtbares Licht absorbierende und/oder reflektierende außenliegende ein- oder mehrschichtige Schlauchfolie als außenliegender Schlauch und ein zwischen den beiden Schläuchen befindliches, durch UV-Strahlung aushärtbares, imprägniertes Trägermaterial, vorzugsweise ein mit einem reaktiven, ungesättigten Harzsystem getränktes Trägermaterial, besonders bevorzugt einem mit einem reaktiven, ungesättigten Harzsystem getränktes Glasfasermaterial, und eine UV-Strahlung und/oder kurzwelliges, sichtbares Licht aussendende vorzugsweise bewegliche Quelle, vorzugsweise ein UV-Strahler.

Durch den Einsatz des erfindungsgemäßen Rohrsanierungssystems, insbesondere durch die erfindungsgemäße Mehrschichtfolie, vorzugsweise in Form einer Schlauchfolie, als innenliegender Schlauch eines Einlegeschlauches, kann der in den zu sanierenden Kanal eingezogene, Einlegeschlauch problemlos, d. h. ohne Ein-oder Abreißen in das Rohr eingezogen und ohne Aufplatzen aufgeblasen werden, um eine problemlose Aushärtung des im Schlauch befindlichen, mit dem flüssigen Tränkmaterial getränkten Trägermaterials mittels UV-Strahlung, zu erzielen. Nach der Aushärtung, wenn das gefestigte, sanierte Kanalrohr aus dem ausgehärteten Trägermaterial vorliegt, kann die erfindungsgemäße Mehrschichtfolie, vorzugsweise in Form einer Schlauchfolie, als innenliegender Schlauch vorzugsweise ohne Ab- oder Zerreißen bzw. Festsitzen davon abgezogen werden.

Bestimmung der Dehnbarkeit

Die Dehnbarkeit einer Mehrschichtfolie wird wie nachfolgend beschrieben mittels eines Aufblastests bestimmt.

Ist die Mehrschichtfolie eine Schlauchfolie kann die Dehnbarkeit wie nachfolgend beschrieben direkt bestimmt werden. Ist die Mehrschichtfolie keine Schlauchfolie, sondern z.B. eine Flachfolie, so wird diese durch Versiegelung zu einem Schlauch verarbeitet und die Dehnbarkeit dieses Schlauchs bestimmt.

Ein 5 m langer Schlauch bzw. eine 5 m lange Schlauchfolie mit einer Flachlegebreite von 435 mm wird an beiden Enden durch zwei Metallscheiben mit einem Durchmesser von jeweils 270 mm und einer Breite von 150 mm luftdicht verschlossen. Als Hilfsmittel kommen dabei Spanngurte und handelsübliches Gewebeklebeband zum Einsatz. Eine der beiden Metallscheiben ist mit einem Ventil versehen, durch welches Druckluft in die Schlauchfolie bzw. den Schlauch geleitet wird. Die Schlauchfolie bzw. der Schlauch wird mittels Druckluft so lange aufgeblasen, bis sie/er platzt. Der Zeitpunkt unmittelbar vor dem Platzen der Schlauchfolie bzw. des Schlauches wird dabei durch eine lokal begrenzte Blase in der aufgeblasenen Schlauchfolie bzw. des aufgeblasenen Schlauches angezeigt, an der unter kontinuierlicher Druckluftzuführung dann letztlich ein Riss entsteht, der zum Platzen der Schlauchfolie bzw. des Schlauches führt.

Für die Bestimmung der erreichten Dehnung wird die Flachlegebreite des Schlauches bzw. der Schlauchfolie nach dem Aufblasen an seiner breitesten Stelle gemessen und zur anfänglichen Flachlegebreite gemäß folgender Formel ins Verhältnis gesetzt.

$$\text{Dehnbarkeit} = (\text{Flachlegebreite nach Aufblasen} / \text{anfängliche Flachlegebreite vor dem Aufblasen} - 1) \cdot 100$$

Die Angabe der erzielten Dehnbarkeit erfolgt in Prozent.

**Beispiele:**

Die nachfolgenden Beispiele und Vergleichsbeispiele dienen der Erläuterung der Erfindung, sind jedoch nicht einschränkend auszulegen.

**I**. Chemische Charakterisierung der eingesetzten Rohstoffe:

| | |
|---|---|
| Durethan Cl31 F: | Copolyamid der Firma Lanxess, gebildet aus ε-Caprolactam, Hexamethylendiamin und Isophthalsäure |
| Grillon CA6E: | PA 6/12-Copolymer |
| PA6: | Homopolyamid der Firma Lanxess, gebildet aus ε-Caprolactam |
| Admer NF 498 E: | mit Maleinsäureanhydridgruppen modifiziertes LDPE der Firma Mitsui (Haftvermittler) |
| Lupolen 2420 F: | LDPE der Firma BASF |
| Exceed 1327 CA: | mittels Metallocen-Katalyse hergestelltes EthylenCopolymer, bei dessen Polymerisation neben Ethylen als weiteres Co-Monomer Hexen eingesetzt worden ist, |
| Surlyn 1652-SB1: | Zinksalz eines Ethylen-Methacrylsäure-Copolymeren der Firma Dupont |

**II.** Herstellung der Mehrschichtfolien

Die Mehrschichtfolien der Vergleichsbeispiele 1-3 (**V1-V3**) bestehen aus drei (**V2**), vier (**V1**) oder fünf Schichten (**V3**). Die erfindungsgemäßen Mehrschichtfolien der Beispiele 1-4 (**B1-B4**) bestehen jeweils aus fünf Schichten. Die einzelnen Schichten der Mehrschichtfolien grenzen jeweils in der Reihenfolge unmittelbar aneinander an, in der sie nachstehend aufgeführt sind. Die Mehrschichtfolien der Vergleichsbeispiele **V1-V3** sowie der Beispiele 1-2 und 4 (**B1-B2** und **B4**) wurden jeweils als Schlauchfolien durch Blasfolien-Co-Extrusion hergestellt. Die Mehrschichtfolie des Beispiels 3 (**B3**) wurde als Flachfolie durch Castfolien-Co-Extrusion hergestellt und anschließend zu einem Schlauch versiegelt.

**III.** Beispiele und Vergleichsbeispiele

Alle nachfolgenden %-Angaben sind jeweils Gew.-%. Alle nachfolgenden μm-Angaben beziehen sich auf die jeweilige Schichtdicke der Mehrschichtfolien.

**III.1** *Vergleichsbeispiele 1-3 (**V1-V3**)*

Die Mehrschichtfolie **V1** entspricht im Schichtaufbau der in Beispiel 2 gemäß EP-A 0 342 897 individualisierten Mehrschichtfolie, wurde jedoch als Schlauchfolie hergestellt.

*Tabelle 1*

| *Schichtaufbau **V1-V3*** | *Rohstoffe **V1*** | *Rohstoffe **V2*** | *Rohstoffe **V3*** |
|---|---|---|---|
| Schicht (a) | - | Lupolen 2420 F (70%), Exceed 1327 CA (30%) 145 μm | Lupolen 2420 F (70%), Exceed 1327 CA (30%) 40 μm |
| Haftvermittlerschicht (b) | Surlyn 1652-SB1 (100%)<br>140 μm | Admer NF 498 E (100%)<br>15 μm | Admer NF 498 E (100%)<br>15 μm |
| Schicht (c) | PA6 (100%) 10 μm | - | Durethan CI 31 F (100%) 40 μm |
| Haftvermittlerschicht (d) | Surlyn 1652-SB1 (100%)<br>110 μm | - | Admer NF 498 E (100%)<br>15 μm |
| Schicht (e) | Grillon CA6E (100%)<br>30 μm | Durethan CI 31F (100%)<br>40 μm | Lupolen 2420F (70%), Exceed 1327 CA (30%)<br>40 μm |

Die Mehrschichtfolie gemäß **V1** hat eine Gesamtschichtdicke von 300 μm. Die Mehrschichtfolie gemäß **V2** hat eine Gesamtschichtdicke von 200 μm. Die Mehrschichtfolie gemäß **V3** hat eine Gesamtschichtdicke von 150 μm.

***111.2** Beispiele 1-4 (**B1-B4**)*

*Tabelle 2*

| *Schichtaufbau* ***B1-B4*** | *Rohstoffe* **B1** | *Rohstoffe* **B2** | *Rohstoffe **B3*** | *Rohstoffe* **B4** |
|---|---|---|---|---|
| Schicht (a) | Lupolen 2420 F (70%), Exceed 1327 CA (30%)<br>80 μm | Lupolen 2420 F (70%), Exceed 1327 CA (30%)<br>80 μm | Lupolen 2420 F (70%), Exceed 1327 CA (30%)<br>80 μm | Lupolen 2420 F (70%), Exceed 1327 CA (30%)<br>155 μm |
| Haftver mittlerschicht (b) | Admer NF 498 E (100%)<br>15μm | Admer NF 498 E (100%)<br>15 μm | Admer NF 498 E (100%)<br>15μm | Admer NF 498 E (100%)<br>15 μm |
| Schicht (c) | Durethan CI 31 F (100%)<br>15 μm | Durethan CI 31 F (100%)<br>20 μm | Durethan CI 31F (100%)<br>15 μm | PA6 (100%)<br>20 μm |
| Haftvermittlerschicht (d) | Admer NF 498 E (100%)<br>15 μm | Admer NF 498 E (100%)<br>15 μm | Admer NF 498 E (100%)<br>15 μm | Surlyn 1652-SB1 (100%)<br>80 μm |
| Schicht (e) | Durethan CI 31F (100%)<br>15 μm | Durethan CI 31F (100%)<br>20 μm | Durethan CI 31F (100%)<br>15 μm | Grillon CA6E (100%)<br>30 μm |

Die Mehrschichtfolien gemäß **B1** und **B3** haben jeweils eine Gesamtschichtdicke von 140 μm. Die Mehrschichtfolie gemäß **B2** hat eine Gesamtschichtdicke von 150 μm. Die Mehrschichtfolie gemäß **B4** hat eine Gesamtschichtdicke von 300 μm.

Bestimmung der Dehnbarkeit

Für die erfindungsgemäßen Mehrschichtfolien der Beispiele 1-4 (**B1-B4**) sowie der Mehrschichtfolien der Vergleichsbeispiele 1-3 (**V1-V3**) wurde jeweils nach der vorstehend beschriebenen Methode ihre Dehnbarkeit bestimmt.

Die Bestimmung der Dehnbarkeit der Mehrschichtfolien der Beispiele 1-4 (**B1-B4**) und der Vergleichsbeispiele 1-3 (**V1-V3**) erfolgte dabei im nicht-konditionierten Zustand der Mehrschichtfolien.

*Tabelle 3*

| Beispiel/ Vergleichsbeispiel | Konditionierung | Dehnbarkeit [%] |
|---|---|---|
| **B1** | nein | 80,2 |
| **B2** | nein | 34,1 |
| **B3** | nein | 39,4 |
| **B4** | nein | 16,9 |
| **V1** | nein | 9,2 |
| **V2** | nein | 12,9 |
| **V3** | nein | 13,2 |

**Patentansprüche**

1. Ein Einlegeschlauch geeignet zur Sanierung von unterirdischen Rohren, vorzugsweise von unterirdischen Kanalrohren, umfassend

   - eine für UV-Strahlung zumindest teilweise durchlässige, flüssigkeitsdichte, vorzugsweise nicht-konditionierte Mehrschichtfolie umfassend eine Schichtfolge aus

     (a) einer Schicht (a) basierend auf wenigstens einem thermoplastischen Olefin-Homo-oder Copolymeren als eine der Außenschichten,
     (b) einer Haftvermittlerschicht (b),
     (c) einer innenliegenden Schicht (c) basierend auf wenigstens einem Homo- und/oder Copolyamid,
     (d) einer Haftvermittlerschicht (d),
     (e) einer Schicht (e) basierend auf wenigstens einem Homo- und/oder Copolyamid als eine der Außenschichten,

   in Form einer Schlauchfolie,
   wobei das thermoplastische Olefin-Homo- oder Copolymer der Schicht (a) eine VICAT Erweichungstemperatur von wenigstens 100°C aufweist;
   als innenliegenden Schlauch und
   - eine flüssigkeitsdichte, UV-Strahlung und/oder kurzwelliges, sichtbares Licht absorbierende und/oder reflektierende außenliegende ein- oder mehrschichtige Schlauchfolie
   als außenliegenden Schlauch und
   - ein dazwischenliegendes mit einem reaktivem Kunststoffharz getränktes Trägermaterial;

   wobei die für UV-Strahlung zumindest teilweise durchlässige, flüssigkeitsdichte Mehrschichtfolie direkt mit ihrer Oberflächenschicht (a) an das Trägermaterial angrenzt.

2. Ein Einlegeschlauch nach Anspruch 1, **dadurch gekennzeichnet, dass** die Schichtdicke der Schicht (a) wenigstens 40%, vorzugsweise wenigstens 50% der Gesamtschichtdicke der für UV-Strahlung zumindest teilweise durchlässigen, flüssigkeitsdichten Mehrschichtfolie beträgt.

3. Ein Einlegeschlauch nach Anspruch 1 oder 2, **dadurch gekennzeichnet, dass** die Schicht (a) der für UV-Strahlung zumindest teilweise durchlässigen, flüssigkeitsdichten Mehrschichtfolie auf wenigstens einem Ethylen-Homo- oder Copolymeren und/oder wenigstens einem Propylen-Homo- oder Copolymeren, basiert.

4. Ein Einlegeschlauch nach einem der vorstehenden Ansprüche, **dadurch gekennzeichnet, dass** die Schichten (c) und (e) der für UV-Strahlung zumindest teilweise durchlässigen, flüssigkeitsdichten Mehrschichtfolie einen identischen Schichtaufbau, vorzugsweise eine identische Schichtdicke und/oder identische Polyamid-Komponenten und/oder eine identische Zusammensetzung, vorzugsweise eine identische Polyamid-Komponente, aufweisen.

5. Ein Einlegeschlauch nach einem der Ansprüche 1 bis 3, **dadurch gekennzeichnet, dass** die Schichten (c) und (e) der für UV-Strahlung zumindest teilweise durchlässigen, flüssigkeitsdichten Mehrschichtfolie einen unterschiedlichen Schichtaufbau, vorzugsweise eine unterschiedliche Schichtdicke und/oder unterschiedliche Polyamid-Komponenten und/oder eine unterschiedliche Zusammensetzung aufweisen.

6. Ein Einlegeschlauch nach einem der vorstehenden Ansprüche, **dadurch gekennzeichnet, dass** die Haftvermittlerschichten (b) und (d) der für UV-Strahlung zumindest teilweise durchlässigen, flüssigkeitsdichten Mehrschichtfolie jeweils unabhängig voneinander auf wenigstens einem modifizierten thermoplastischen Olefin-Homo-oder Copolymeren, vorzugsweise jeweils unabhängig voneinander auf wenigstens einem modifizierten thermoplastischen Ethylen-Homo- oder Copolymeren und/ oder wenigstens einem modifizierten Propylen-Homo- oder Copolymeren basieren.

7. Ein Einlegeschlauch nach einem der Ansprüche 1 - 6, **dadurch gekennzeichnet, dass** die für UV-Strahlung zumindest teilweise durchlässige, flüssigkeitsdichte Mehrschichtfolie aus den Schichten (a) - (e) besteht.

8. Ein Einlegeschlauch nach einem der vorstehenden Ansprüche, **dadurch gekennzeichnet, dass** die für UV-Strahlung zumindest teilweise durchlässige, flüssigkeitsdichte Mehrschichtfolie zu wenigstens 80%, vorzugsweise zu wenigstens 90% durchlässig für UV-Strahlung, vorzugsweise für UV-Strahlung in einem Wellenlängenbereich von 200 bis 400 nm ist.

9. Ein Rohrsanierungssystem geeignet zur Sanierung von unterirdischen Rohren, vorzugsweise von unterirdischen Kanalrohren, umfassend einen, für das Einbringen in das zu sanierende Rohr, vorzugsweise Kanalrohr vorgesehenen Einlegeschlauch nach einem der Ansprüche 1 bis 8 und eine UV-Strahlung und/oder kurzwelliges, sichtbares Licht aussendende vorzugsweise bewegliche Quelle, vorzugsweise ein UV-Strahler.

## Claims

1. Insertion tube suitable for the renovation of subterranean pipes, preferably subterranean drainage pipes, comprising

   - a preferably nonconditioned multilayer film that is impermeable to liquids and that is at least to some extent permeable to UV radiation, comprising a layer sequence made of

     (a) a layer (a) based on at least one thermoplastic olefin homo- or copolymer, as one of the external layers,
     (b) an adhesive-promoter layer (b),
     (c) an internally situated layer (c) based on at least one homo- and/or copolyamide,
     (d) an adhesive-promoter layer (d), and
     (e) a layer (e) based on at least one homo- and/or copolyamide, as one of the external layers,

   in the form of a tubular film,
   where the VICAT softening point of the thermoplastic olefin homo- or copolymer of the layer (a) is at least 100°C; as internally situated tube, and
   - an externally situated single- or multilayer tubular film which is impermeable to liquids, and which reflects and/or absorbs UV radiation and/or short-wave, visible light,
   as externally situated tube, and
   - a support material situated therebetween and saturated with a reactive synthetic resin;

   wherein the surface layer (a) of the multilayer film that is impermeable to liquids and that is at least to some extent permeable to UV radiation is directly adjacent to the support material.

2. Insertion tube according to Claim 1, **characterized in that** the thickness of the layer (a) is at least 40%, preferably at least 50%, of the total thickness of the multilayer film that is impermeable to liquids and at least to some extent permeable to UV radiation.

3. Insertion tube according to Claim 1 or 2, **characterized in that** the layer (a) of the multilayer film that is impermeable to liquids and at least to some extent permeable to UV radiation is based on at least one ethylene homo- or copolymer and/or on at least one propylene homo- or copolymer.

4. Insertion tube according to any of the preceding claims, **characterized in that** the layers (c) and (e) of the multilayer film that is impermeable to liquids and that is at least to some extent permeable to UV radiation have an identical layer structure, preferably an identical layer thickness, and/or identical polyamide components, and/or an identical composition, preferably an identical polyamide component.

5. Insertion tube according to any of Claims 1 to 3, **characterized in that** the layers (c) and (e) of the multilayer film that is impermeable to liquids and that is at least to some extent permeable to UV radiation have a different layer structure, preferably a different layer thickness, and/or different polyamide components, and/or a different composition.

6. Insertion tube according to any of the preceding claims, **characterized in that** the adhesive-promoter layers (b) and (d) of the multilayer film that is impermeable to liquids and that is at least to some extent permeable to UV radiation are based respectively mutually independently on at least one modified thermoplastic olefin homo- or copolymer, preferably respectively mutually independently on at least one modified thermoplastic ethylene homo- or copolymer and/or at least one modified propylene homo- or copolymer.

7. Insertion tube according to any of Claims 1 to 6, **characterized in that** the multilayer film that is impermeable to liquids and that is at least to some extent permeable to UV radiation consists of the layers (a)-(e).

8. Insertion tube according to any of the preceding claims, **characterized in that** the multilayer film that is impermeable to liquids and that is at least to some extent permeable to UV radiation is permeable to an extent of at least 80%, preferably to an extent of at least 90%, to UV radiation, preferably to UV radiation in a wavelength range from 200 to 400 nm.

9. Pipe-renovation system suitable for the renovation of subterranean pipes, preferably subterranean drainage pipes, comprising an insertion tube according to any of Claims 1 to 8, provided for introduction into the pipe requiring renovation, preferably drainage pipe, and a source that emits UV radiation and/or short-wave, visible light, and that is preferably moveable, preferably a UV source.

**Revendications**

1. Gaine d'encastrement appropriée pour l'assainissement de tuyaux souterrains, de préférence de canalisations souterraines, comprenant

    - une feuille multicouche au moins partiellement transparente au rayonnement UV, étanche aux liquides, de préférence non conditionnée, comprenant une succession de couches constituée par

        (a) une couche (a) à base d'au moins un homopolymère ou copolymère oléfinique thermoplastique comme une des couches extérieures,
        (b) une couche de promoteur d'adhérence (b),
        (c) une couche interne (c) à base d'au moins un homopolyamide et/ou copolyamide,
        (d) une couche de promoteur d'adhérence (d),
        (e) une couche (e) à base d'au moins un homopolyamide et/ou copolyamide comme une des couches externes,

    sous forme d'une feuille tubulaire,
    l'homopolymère ou le copolymère oléfinique thermoplastique de la couche (a) présentant une température de ramollissement selon VICAT d'au moins 100°C ;
    comme couche interne et

- une feuille tubulaire étanche aux liquides, absorbant et/ou réfléchissant le rayonnement UV et/ou la lumière visible à courte longueur d'onde, externe, à une ou plusieurs couches,
en tant que gaine externe et
- un matériau support situé entre celles-ci, imprégné d'une résine réactive en matériau synthétique ;

la feuille multicouche au moins partiellement transparente au rayonnement UV, étanche aux liquides, étant directement adjacente, avec sa couche de surface (a), au matériau support.

2. Gaine d'encastrement selon la revendication 1, **caractérisée en ce que** l'épaisseur de la couche (a) représente au moins 40%, de préférence au moins 50% de l'épaisseur de couche totale de la feuille multicouche au moins partiellement transparente au rayonnement UV, étanche aux liquides.

3. Gaine d'encastrement selon la revendication 1 ou 2, **caractérisée en ce que** la couche (a) de la feuille multicouche au moins partiellement transparente au rayonnement UV, étanche aux liquides est à base d'au moins un homopolymère ou copolymère d'éthylène et/ou d'au moins un homopolymère ou copolymère de propylène.

4. Gaine d'encastrement selon l'une quelconque des revendications précédentes, **caractérisée en ce que** les couches (c) et (e) de la feuille multicouche au moins partiellement transparente au rayonnement UV, étanche aux liquides présentent une structure de couche identique, de préférence une épaisseur de couche identique et/ou des composants de polyamide identiques et/ou une composition identique, de préférence un composant polyamide identique.

5. Gaine d'encastrement selon l'une quelconque des revendications 1 à 3, **caractérisée en ce que** les couches (c) et (e) de la feuille multicouche au moins partiellement transparente au rayonnement UV, étanche aux liquides présentent une structure de couche différente, de préférence une épaisseur de couche différente et/ou des composants de polyamide différents et/ou une composition différente.

6. Gaine d'encastrement selon l'une quelconque des revendications précédentes, **caractérisée en ce que** les couches de promoteur d'adhérence (b) et (d) de la feuille multicouche au moins partiellement transparente au rayonnement UV, étanche aux liquides sont à chaque fois, indépendamment l'une de l'autre, à base d'au moins un homopolymère ou copolymère oléfinique thermoplastique modifié, de préférence à chaque fois, indépendamment l'une de l'autre, à base d'au moins un homopolymère ou copolymère d'éthylène thermoplastique modifié et/ou d'au moins un homopolymère ou copolymère de propylène modifié.

7. Gaine d'encastrement selon l'une quelconque des revendications 1 à 6, **caractérisée en ce que** la feuille multicouche au moins partiellement transparente au rayonnement UV, étanche aux liquides, est constituée par les couches (a)-(e).

8. Gaine d'encastrement selon l'une quelconque des revendications précédentes, **caractérisée en ce que** la feuille multicouche au moins partiellement transparente au rayonnement UV, étanche aux liquides, est transparente au rayonnement UV, de préférence au rayonnement UV dans une plage de longueurs d'onde de 200 à 400 nm, à raison d'au moins 80%, de préférence d'au moins 90%.

9. Système d'assainissement de tuyaux approprié à l'assainissement de tuyaux souterrains, de préférence de canalisations souterraines, comprenant une gaine d'encastrement prévue pour l'introduction dans le tuyau, de préférence la canalisation, à assainir selon l'une quelconque des revendications 1 à 8 et une source émettant un rayonnement UV et/ou de la lumière visible à courte longueur d'onde, de préférence mobile, de préférence un émetteur d'UV.

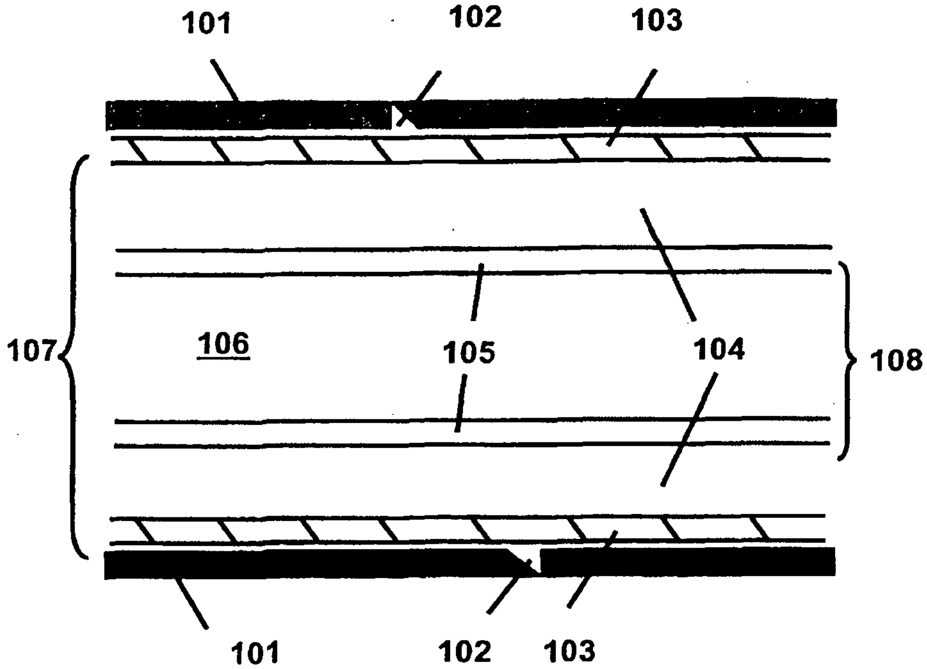


Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0342897 A
- WO 2007054350 A1
- EP 1155256 B